# EUROPÄISCHE PATENTSCHRIFT

(11) **EP 3 405 756 B1**
(45) Veröffentlichungstag und Bekanntmachung des Hinweises auf die Patenterteilung: **11.03.2020**
(21) Anmeldenummer: 17700221.9
(22) Anmeldetag: 10.01.2017
(51) Int. Cl.: G01F 23/26, G01B 7/06

(54) **GERÄT AUSGEFÜHRT FÜR DIE ERMITTLUNG DES FÜLLSTANDS EINES ENTNEHMBAREN BEHÄLTERS**
DEVICE ADAPTED FOR DETERMINATION OF A FLUID LEVEL OF A REMOVABLE RESERVOIR
DISPOSITIF ADAPTÉ POUR LA DÉTERMINATION D'UN NIVEAU DE FLUIDE D'UN RÉSERVOIR AMOVIBLE

(30) Priorität: 20.01.2016 DE 102016200762
(43) Veröffentlichungstag der Anmeldung: 28.11.2018
(73) Patentinhaber: BSH Hausgeräte GmbH, 81739 München (DE)
(72) Erfinder: EGLMEIER, Hans, 10587 Berlin (DE); MOHSENI, Soheil, 93051 Regensburg (DE); REITNER, Josef, 93093 Donaustauf (DE)
(86) Internationale Anmeldenummer: PCT/EP2017/050386
(87) Internationale Veröffentlichungsnummer: WO 2017/125281

(56) Entgegenhaltungen:
- EP-A1- 2 400 275
- DE-A1- 3 940 082
- DE-A1- 4 019 290
- DE-A1-102010 001 605
- US-A- 4 912 407

## Beschreibung

Die Erfindung betrifft ein Gerät mit einem entkoppelbaren Behälter gemäß dem Oberbegriff des unabhängigen Patentanspruchs 1.

Es gibt eine Vielzahl von unterschiedlichen Geräten, insbesondere Hausgeräten, die einen Behälter zur Aufnahme einer Flüssigkeit umfassen. Beispiele für solche Geräte sind Kaffeemaschinen, Trockner, Waschmaschinen, Dampfgarer, Dampfgarer-Kombinationen, etc. Dabei ist es häufig wünschenswert, das der Behälter zum Einfüllen oder Entfernen einer Flüssigkeit aus dem Gerät entnommen werden kann. Des Weiteren ist es meist wünschenswert, dass der Füllstand des Behälters in präziser Weise erfasst und ggf. angezeigt werden kann, um einen Nutzer des Geräts frühzeitig darauf aufmerksam machen zu können, dass der Behälter aufgefüllt bzw. geleert werden muss.

Die DE 10 2010 001605 A1 beschreibt ein Gerät gemäß dem Oberbegriff des unabhängigen Patentanspruchs 1.

Eine Möglichkeit zur Ermittlung des Füllstands eines Behälters für Flüssigkeit ist die Verwendung eines Schwimmers, der auf der Oberfläche der Flüssigkeit im Behälter schwimmt, so dass die Position des Schwimmers innerhalb des Behälters den Füllstand des Behälters anzeigt. Die Verwendung eines Schwimmers ist jedoch nachteilig, da der Schwimmer einklemmen kann, so dass sich fehlerhafte Füllstandsmessungen ergeben. Außerdem kann der Schwimmer verschmutzen und die Reinigung des Schwimmers kann ggf. aufwendig sein.

Das vorliegende Dokument befasst sich mit der technischen Aufgabe, eine präzise und komfortable Füllstandsmessung eines entnehmbaren Behälters eines Geräts, insbesondere eines Hausgeräts, zu ermöglichen. Dabei soll insbesondere der Füllstand eines Behälters mit einer Flüssigkeit oder mit einer granularen Materie bzw. Pulver gemessen werden können.

Die Aufgabe wird durch den unabhängigen Patentanspruch 1 gelöst. Vorteilhafte Ausführungsformen werden in den abhängigen Ansprüchen beschrieben.

Gemäß einem Aspekt wird ein Gerät, insbesondere ein Hausgerät bzw. ein Haushaltsgerät, beschrieben. Das Gerät umfasst ein Gehäuse und einen von dem Gehäuse entkoppelbaren bzw. abnehmbaren Behälter, insbesondere einem Flüssigkeitsbehälter. Der Behälter kann eingerichtet sein, eine Flüssigkeit (wie z.B. Wasser) aufzunehmen. Alternativ kann der Behälter eingerichtet sein, ein Granulat bzw. pulverförmige Materie aufzunehmen. Der Behälter kann z.B. an einer bestimmten Stelle am Gehäuse fixiert werden, um Flüssigkeit bzw. ein Granulat in dem Gehäuse bereitzustellen oder um Flüssigkeit bzw. Granulat aus dem Gehäuse aufzunehmen.

Das Gerät umfasst weiter einen an dem Gehäuse angeordneten kapazitiven Füllstandssensor, der eingerichtet ist, einen Kapazitätswert zu ermitteln, wobei der kapazitive Füllstandssensor derart angeordnet ist, dass der Kapazitätswert von dem Füllstand von (flüssiger oder granulärer) Materie in dem Behälter abhängt. Zu diesem Zweck besteht der Behälter typischerweise aus einem dielektrischen und/oder nichtleitfähigem Material (z.B. mit einer Dielektrizitätszahl von 20, 10, 5 oder weniger). So kann gewährleistet werden, dass eine Änderung des Füllstands in zuverlässiger Weise als eine Änderung des Kapazitätswertes erfasst werden kann. Die Verwendung eines kapazitiven Füllstandssensors ist insbesondere bei Verwendung eines entnehmbaren bzw. entkoppelbaren Behälters vorteilhaft.

Außerdem umfasst das Gerät einen Abstandssensor, der eingerichtet ist, einen Abstandswert zu ermitteln, wobei der Abstandswert von einem Abstand zwischen dem Füllstandssensor und dem Behälter abhängt. Des Weiteren umfasst das Gerät eine Verarbeitungseinheit, die eingerichtet ist, auf Basis des Kapazitätswertes und auf Basis des Abstandswertes einen Wert für den Füllstand zu ermitteln. Die Erfassung und Berücksichtigung des Abstandswertes bei der Ermittlung des Wertes des Füllstands ermöglicht eine präzise Füllstandsermittlung bei einem abnehmbaren Behälter.

Der Abstandssensor umfasst einen induktiven Abstandsensor. Dabei kann der induktive Abstandssensor eine Sensoreinheit umfassen, die an dem Gehäuse angeordnet ist, und die eingerichtet ist, ein elektromagnetisches Feld zu generieren. Außerdem kann der Abstandssensor eine beeinflussende Einheit umfassen, die an dem Behälter angeordnet ist, und die eingerichtet ist, das elektromagnetische Feld zu beeinflussen, insbesondere zu dämpfen. Die Verwendung eines induktiven Abstandssensors ermöglicht eine Kosten-effiziente, präzise und komfortable Abstandsmessung, insbesondere bei abnehmbaren Behältern.

Ein Ausmaß der Beeinflussung, insbesondere ein Ausmaß der Dämpfung, des elektromagnetischen Feldes kann von dem Abstand zwischen der Sensoreinheit und der beeinflussenden Einheit abhängen. Des Weiteren kann der Abstandswert von dem Ausmaß der Beeinflussung, insbesondere von dem Ausmaß der Dämpfung, des elektromagnetischen Feldes abhängen. Dabei kann die Sensoreinheit einen elektrischen Schwingkreis (z.B. mit einer Spule und/oder mit einer ersten leitfähigen Struktur) zur Erzeugung des elektromagnetischen Feldes mittels eines Wechselstroms umfassen. Ein Pegel bzw. eine Amplitude, eine Phase oder Frequenzverschiebung des Wechselstroms kann dabei in rückkoppelnder Weise von der Beeinflussung des elektromagnetischen Feldes abhängen. Somit kann der Abstandswert auf Basis der Amplitude bzw. des Pegels, der Phase und/oder einer Frequenzverschiebung des Wechselstroms ermittelt werden.

Die beeinflussende Einheit kann eine zweite leitfähige Struktur, insbesondere eine Mäander-Struktur, umfassen. Dabei kann die beeinflussende Einheit eine folienhafte Form aufweisen. Durch Verwendung einer leitfähigen Struktur kann das elektromagnetische Feld in Abstands-abhängiger Weise beeinflusst werden.

Die Sensoreinheit und/oder die beeinflussende Einheit können auf unterschiedliche Weise an dem Gehäuse bzw. an dem Behälter befestigt werden. Beispielsweise sind die Sensoreinheit und/oder die beeinflussende Einheit auf das Gehäuse bzw. auf den Behälter geklebt und/oder in das Gehäuse bzw. in den Behälter eingerastet. Alternativ oder ergänzend können die Sensoreinheit und/oder die beeinflussende Einheit: eine durch Laserstrukturierung erzeugte leitfähige Struktur umfassen; eine leitfähige Struktur umfassen, die auf das Gehäuse bzw. auf den Behälter gespritzt ist; eine leitfähige Struktur umfassen, die auf das Gehäuse bzw. auf den Behälter aufgedampft ist; eine leitfähige Struktur umfassen, die auf das Gehäuse bzw. auf den Behälter lackiert ist; und/oder eine leitfähige Struktur umfassen, die auf das Gehäuse bzw. auf den Behälter gedruckt ist. Diese Befestigungsmöglichkeiten ermöglichen eine effiziente Bereitstellung des Abstandssensors.

Die Verarbeitungseinheit (die z.B. einen Prozessor umfasst) kann eingerichtet sein, eine Zuweisungsfunktion zu ermitteln, die für unterschiedliche Kombinationen (d.h. Paaren) von Abstandswerten und Kapazitätswerten Füllstandswerte anzeigt. Die Zuweisungsfunktion kann im Vorfeld (z.B. auf Basis von Messungen) ermittelt und auf einer Speichereinheit des Gerätes gespeichert werden. Die Zuweisungsfunktion kann z.B. eine Look-Up Tabelle und/oder eine analytische Funktion umfassen. Die Verarbeitungseinheit kann dann eingerichtet sein, den Wert für den Füllstand in Abhängigkeit von der Zuweisungsfunktion zu ermitteln. Insbesondere kann mittels der Zuweisungsfunktion für einen bestimmten Abstandswert und für einen bestimmten Kapazitätswert ein bestimmter Wert für den Füllstand ermittelt werden. So kann der Füllstand von flüssiger oder granularer Materie in dem Behälter in präziser Weise ermittelt werden.

Das Gehäuse kann eine erste Gehäusewand aufweisen, die dem Behälter (insbesondere einer ersten Behälterwand des Behälters) zugewandt ist. Der kapazitive Füllstandssensor und/oder die Sensoreinheit des Abstandssensors können an der ersten Gehäusewand angeordnet sein. Die beeinflussende Einheit des Abstandssensors kann an der ersten Behälterwand angeordnet sein (insbesondere direkt gegenüber der Sensoreinheit). So können die Abstandswerte und Kapazitätswerte in zuverlässiger Weise ermittelt werden.

Nicht erfindungsgemäß wird ein Verfahren zur Ermittlung eines Wertes eines Füllstands von (flüssiger oder granulärer) Materie in einem abnehmbaren Behälter eines Gerätes beschrieben. Das Verfahren umfasst das Ermitteln eines Kapazitätswertes mittels eines kapazitiven Füllstandssensors, wobei der Kapazitätswert vom Füllstand von (flüssiger oder granulärer) Materie in dem Behälter abhängt. Außerdem umfasst das Verfahren das Ermitteln eines Abstandswertes mittels eines Abstandssensors, wobei der Abstandswert von einem Abstand zwischen dem Füllstandssensor und dem Behälter abhängt. Des Weiteren umfasst das Verfahren das Ermitteln eines Wertes des Füllstands auf Basis des Kapazitätswertes und auf Basis des Abstandswertes.

Es ist zu beachten, dass die in diesem Dokument beschriebenen Verfahren, Vorrichtungen und Geräte sowohl alleine, als auch in Kombination mit anderen in diesem Dokument beschriebenen Verfahren, Vorrichtungen und Geräte verwendet werden können. Desweiteren können jegliche Aspekte der in diesem Dokument beschriebenen Verfahren, Vorrichtung und Geräte in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 ein beispielhaftes Gerät mit einem entnehmbaren Flüssigkeitsbehälter; und
Figur 2 ein Ablaufdiagramm eines beispielhaften Verfahrens zur Ermittlung des Füllstands eines Flüssigkeitsbehälters.

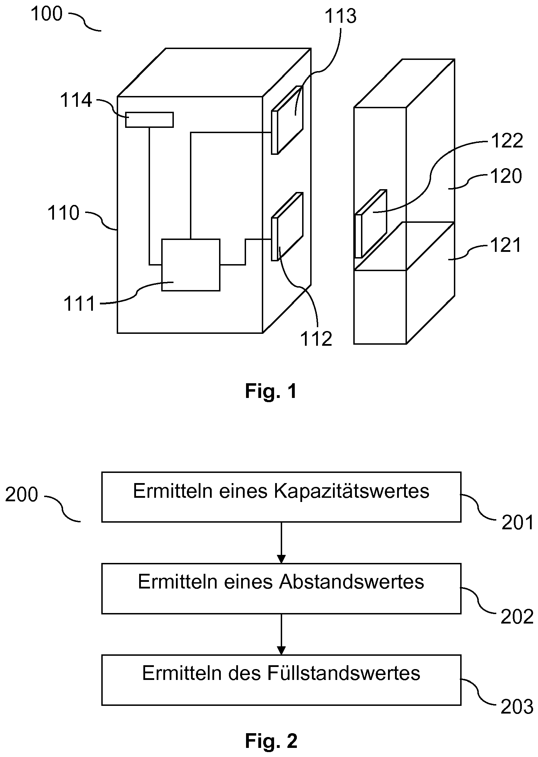

Wie eingangs dargelegt, befasst sich das vorliegende Dokument mit der komfortablen und präzisen Ermittlung des Füllstands eines entnehmbaren Behälters eines Geräts, insbesondere eines Hausgeräts. Im Folgenden wird spezifisch auf einen Flüssigkeitsbehälter eingegangen. Es sei jedoch darauf hingewiesen, dass die Ausführungen in analoger Weise auf einen Behälter mit granularer Materie anwendbar sind. In diesem Zusammenhang zeigt Fig. 1 ein Blockdiagramm eines beispielhaften Hausgeräts 100 mit einem Gehäuse 110 und einem Flüssigkeitsbehälter 120. Der Flüssigkeitsbehälter 120 kann eine Flüssigkeit 121 (z.B. Wasser) aufnehmen, und der Flüssigkeitsbehälter 120 kann zum Einfüllen bzw. zum Entleeren der Flüssigkeit 121 von dem Gerät 110 entkoppelt werden. Beispielhafte entnehmbare Flüssigkeitsbehälter 120 sind eine Einspülschale, ein Wassertank oder eine Abtropfschale.

Der Füllstand der Flüssigkeit 121 im Behälter 120 kann in präziser Weise mittels eines kapazitiven Füllstandssensors 113 erfasst werden. Um eine vollständige und einfache Entkopplung des Flüssigkeitsbehälters 120 zu ermöglichen, ist dabei der Füllstandssensor 113 bevorzugt am Gehäuse 110 des Geräts 100 angeordnet. Der Füllstandssensor 113 kann dazu an dem Gehäuse 110 des Geräts 100 angebracht werden, und die zu messende Flüssigkeit 121 im Flüssigkeitsbehälter 120 kann an das Gehäuse 110 herangebracht werden bzw. der Flüssigkeitsbehälter 120 kann derart an das Gehäuse 110 angedockt werden, dass sich die Flüssigkeit 121 in unmittelbarer Nähe zu dem Füllstandssensor 113 befindet.

Dabei entsteht zwischen dem Füllstandssensor 113 und dem Flüssigkeitsbehälter 120 typischerweise ein Luftspalt bzw. ein Abstand. Aufgrund mechanisches Toleranzen und/oder aufgrund von Fertigungstoleranzen kann der Luftspalt bzw. der Abstand zwischen Füllstandssensor 113 und Flüssigkeitsbehälter 120 variieren. Des Weiteren kann ein fehlerhaftes Andocken des Flüssigkeitsbehälters 120 an das Gehäuse 110 zu einem überhöhten Abstand zwischen dem kapazitiven Füllstandssensor 113 und dem Flüssigkeitsbehälter 120 führen. Als Folge daraus können sich die zu messende Gesamtkapazität (d.h. der Kapazitätswert) und damit der ermittelte Füllstand verändern. Mit anderen Worten können variierende Abstände zwischen dem Füllstandssensor 113 und dem Flüssigkeitsbehälter 120 zu Ungenauigkeiten in Bezug auf den ermittelten Füllstand führen. Insbesondere ist es für den kapazitiven Füllstandssensor 113 typischerweise nicht feststellbar ist, ob eine Änderungen der erfassten Gesamtkapazität durch Abstands-Toleranzen oder durch eine Änderung von Füllmenge bzw. Füllzustand (wie z.B. Umweltbedingungen, Restbestände, etc.) verursacht werden, so dass ein fehlerhafter Wert für den Füllstand ermittelt werden kann. Dies kann wiederum dazu führen, dass ein Nutzer zu früh bzw. zu spät darauf hingewiesen wird, den Flüssigkeitsbehälter 120 zu entleeren bzw. aufzufüllen.

Eine Möglichkeit, die Genauigkeit der Füllstandsmessung zu erhöhen, sind konstruktive Vorkehrungen bzw. Elemente wie z.B. Rasthaken und/oder die Verwendung von steifen Materialien. Durch derartige Maßnahmen werden jedoch typischerweise die Herstellungskosten erhöht und/oder Designfreiheiten eingeschränkt. Außerdem können auch durch derartige Maßnahmen Bedienfehler eines Nutzers meist nicht gänzlich ausgeschlossen werden.

Das in Fig. 1 dargestellte Gerät 100 umfasst einen Abstandssensor 112, 122, der eingerichtet ist, einen Abstand zwischen dem kapazitiven Füllstandssensor 113 und dem Flüssigkeitsbehälter 120 zu erfassen. Insbesondere kann der Abstandssensor 112, 112 Abstandsdaten bereitstellen, die den Abstand zwischen dem kapazitiven Füllstandssensor 113 und dem Flüssigkeitsbehälter 120 anzeigen. Die Abstandsdaten (insbesondere eine erfasster Abstandswert) können an eine Verarbeitungseinheit 111 des Geräts 100 übertragen werden. Des Weiteren kann die Verarbeitungseinheit 111 Füllstandsdaten (insbesondere einen Kapazitätswert) von dem Füllstandssensor 113 erhalten. Die Verarbeitungseinheit 111 kann dann auf Basis der Füllstandsdaten und auf Basis der Abstandsdaten in präziser Weise den aktuellen Füllstand der Flüssigkeit 121 in dem Flüssigkeitsbehälter 120 ermitteln.

Die Füllstandsdaten können einen Kapazitätswert anzeigen, wobei der Kapazitätswert von dem Füllstand des Flüssigkeitsbehälters 120 und von der Breite des Luftspalts, d.h. von dem Abstand, zwischen dem Füllstandssensor 113 und dem Flüssigkeitsbehälter 120 abhängt. Die Verarbeitungseinheit 111 kann eingerichtet sein, eine Zuweisungsfunktion zu bestimmen, die einem Abstandswert und einem gemessenen Kapazitätswert einen Füllstandswert zuweist. Die Zuweisungsfunktion kann z.B. eine Look-Up Tabelle umfassen. Alternativ oder ergänzend kann die Zuweisungsfunktion eine analytische Funktion umfassen.

Der Abstandssensor 112, 122 stellt somit einen Abstandswert bereit (der den Abstand zwischen dem Füllstandssensor 113 und dem Flüssigkeitsbehälter 120 anzeigt). Des Weiteren wird der Kapazitätswert durch die Füllstandsdaten das kapazitiven Füllstandssensors 113 angezeigt. Die Verarbeitungseinheit 111 kann somit mittels der Zuweisungsfunktion und mittels der Abstandsdaten und der Füllstandsdaten in präziser Weise den Füllstandswert bestimmen. Information in Bezug auf den Füllstandswert (z.B. eine Aufforderung zur Entnahme des Flüssigkeitsbehälters 120) kann dann über eine Benutzerschnittstelle 114 des Geräts 100 ausgegeben werden.

Erfindungsgemäß umfasst der Abstandssensor 112, 122 einen induktiven Abstandssensor. Die Verwendung eines induktiven Abstandssensors ist vorteilhaft, da so Interferenzen mit dem kapazitiven Füllstandssensor 113 vermieden werden können. Des Weiteren ist eine induktive Abstandsmessung typischerweise unabhängig von dem Füllstand des Flüssigkeitsbehälters 120, so dass der Abstand für unterschiedliche Füllstände in präziser Weise ermittelt werden kann.

Der induktive Abstandssensor 112, 122 umfasst eine Sensoreinheit 112, die an dem Gehäuse 110 des Geräts 100 angeordnet sein kann. Die Sensoreinheit 112 kann einen Schwingkreis umfassen, der eine Spule und einen Kondensator aufweist. Eine Resonanzfrequenz des Schwingkreises und/oder eine Amplitude einer Schwingung des Schwingkreises hängt dabei typischerweise von Eigenschaften der Umgebung der Sensoreinheit 112 ab.

Der Flüssigkeitsbehälter 120 weist eine beeinflussende Einheit 122 auf, die eingerichtet ist, ein von der Sensoreinheit 112 generiertes elektromagnetisches Feld zu beeinflussen, insbesondere zu dämpfen. Der Grad der Beeinflussung hängt dabei von dem Abstand zwischen der Sensoreinheit 112 und der beeinflussenden Einheit 122 ab. Insbesondere kann die beeinflussende Einheit 122 eine leitfähige Struktur (z.B. eine Mäander Struktur) aufweisen, in der durch das elektromagnetische Feld Wirbelströme hervorgerufen werden. Durch diese Wirbelströme wird die Amplitude des Wechselstroms im Schwingkreis in der Sensoreinheit 112 verändert. Die Amplitude des Wechselstroms zeigt in diesem Fall den Abstand zwischen der Sensoreinheit 112 und der beeinflussenden Einheit 122 (und damit den Abstand zwischen dem Füllstandssensor 113 und dem Flüssigkeitsbehälter 120) an.

Am Flüssigkeitsbehälter 120 kann somit eine leitfähige Struktur 122 angebracht werden, die mit der induktiven Sensoreinheit 112 am Gehäuse 110 interagiert. Die Abstandsdaten können eine Frequenzverschiebung und/oder eine Amplitudenänderung an der Sensoreinheit 112 anzeigen. Das Ausmaß der Frequenzverschiebung und/oder Amplitudenänderung ist dabei ein proportionaler Indikator für den Abstand zwischen dem Gehäuse 110 und dem Flüssigkeitsbehälter 120.

Die Induktivität des Schwingkreises der Sensoreinheit 112 kann aus einer Spule oder einer leitfähigen Strukturen wie z.B. einer Mäander-Struktur auf einer Leiterpalte oder auf einer Sensorfolie realisiert werden und ggf. am Gehäuse 120 angebracht werden. Die leitfähige Struktur der beeinflussenden Einheit 122 kann als Metallfläche einer Leiterplatte oder Sensorfolie implementiert werden und ggf. an dem Flüssigkeitsbehälter 120 angebracht werden.

Dabei können die Einheiten 112, 122 als Klebestreifen bzw. über eine Verrastung (z.B. mit einer Nase) an dem Gehäuse 110 bzw. an dem Behälter 120 befestigt werden. Alternativ oder ergänzend können durch Laserstrukturierung leitfähige Strukturen am Flüssigkeitsbehälter 120 erzeugt werden. Alternativ oder ergänzend kann eine Sensorfolie an das Gehäuse 110 bzw. eine leitfähige Struktur an den Flüssigkeitsbehälter 120 gespritzt, lackiert, gedampft oder gedruckt werden.

Fig. 2 zeigt ein Ablaufdiagramm eines beispielhaften Verfahrens 200 zur Ermittlung eines Wertes des Füllstands von Flüssigkeit 121 in einem abnehmbaren Flüssigkeitsbehälter 120 eines Gerätes 100 (insbesondere eines Hausgeräts). Das Verfahren 200 umfasst das Ermitteln 201 eines Kapazitätswertes mittels eines kapazitiven Füllstandssensors 113. Dabei hängt der Kapazitätswert vom Füllstand von Flüssigkeit 121 in dem Flüssigkeitsbehälter 120 ab. Der kapazitive Füllstandssensor 113 kann dabei an einer Gehäusewand eines Gehäuses 110 des Gerätes 100 angeordnet sein, wobei die Gehäusewand dem Flüssigkeitsbehälter 120 zugewandt ist.

Außerdem umfasst das Verfahren 200 das Ermitteln 202 eines Abstandswertes mittels eines Abstandssensors 112, 122. Dabei ist der Abstandswert von dem Abstand zwischen dem kapazitiven Füllstandssensor 113 und dem Flüssigkeitsbehälter 120 abhängig. Des Weiteren umfasst das Verfahren 200 das Ermitteln 203 eines Wertes des Füllstands auf Basis des Kapazitätswertes und auf Basis des Abstandswertes. Durch Berücksichtigung des Abstandswertes kann der Wert des Füllstandes eines entnehmbaren Flüssigkeitsbehälters in präziser Weise ermittelt werden.

Die vorliegende Erfindung ist nicht auf die gezeigten Ausführungsbeispiele beschränkt, sondern wird durch die angefügten Patentansprüche definiert. Insbesondere ist zu beachten, dass die Beschreibung und die Figuren nur das Prinzip der vorgeschlagenen Verfahren, Vorrichtungen und Geräte veranschaulichen sollen.

## Patentansprüche

1. Gerät (100), das umfasst,
- ein Gehäuse (110);
- einen von dem Gehäuse (110) entkoppelbaren Behälter (120);
- einen an dem Gehäuse (110) angeordneten kapazitiven Füllstandssensor (113), der eingerichtet ist, einen Kapazitätswert zu ermitteln, der von einem Füllstand von Materie (121) in dem Behälter (120) abhängt;
**gekennzeichnet durch**
- einen Abstandssensor (112, 122), der eingerichtet ist, einen Abstandswert zu ermitteln, der von einem Abstand zwischen dem Füllstandssensor (113) und dem Behälter (120) abhängt; und
- eine Verarbeitungseinheit (111), die eingerichtet ist, auf Basis des Kapazitätswertes und auf Basis des Abstandswertes einen Wert für den Füllstand zu ermitteln, wobei der Abstandssensor (112, 122) einen induktiven Abstandsensor umfasst.

2. Gerät (100) gemäß Anspruch 1, wobei der induktive Abstandssensor (112, 122) umfasst,
- eine Sensoreinheit (112), die an dem Gehäuse (110) angeordnet ist, und die eingerichtet ist, ein elektromagnetisches Feld zu generieren; und
- eine beeinflussende Einheit (122), die an dem Behälter (120) angeordnet ist, und die eingerichtet ist, das elektromagnetische Feld zu beeinflussen, insbesondere zu dämpfen.

3. Gerät (100) gemäß Anspruch 2, wobei
- ein Ausmaß der Beeinflussung, insbesondere der Dämpfung, des elektromagnetischen Feldes von einem Abstand zwischen der Sensoreinheit (112) und der beeinflussenden Einheit (122) abhängt; und
- der Abstandswert von dem Ausmaß der Beeinflussung, insbesondere der Dämpfung, des elektromagnetischen Feldes abhängt.

4. Gerät (100) gemäß einem der Ansprüche 2 bis 3, wobei
- die Sensoreinheit (112) einen elektrischen Schwingkreis zur Erzeugung des elektromagnetischen Feldes mittels eines Wechselstroms umfasst; und
- der Abstandswert von einer Amplitude und/oder von einer Phase des Wechselstroms abhängt.

5. Gerät (100) gemäß einem der Ansprüche 2 bis 4, wobei die Sensoreinheit (112) eine Spule und/oder eine erste leitfähige Struktur umfasst.

6. Gerät (100) gemäß einem der Ansprüche 2 bis 5, wobei die beeinflussende Einheit (122) eine zweite leitfähige Struktur, insbesondere eine Mäander-Struktur, umfasst.

7. Gerät (100) gemäß einem der Ansprüche 2 bis 6, wobei die beeinflussende Einheit (112) eine folienhafte Form aufweist.

8. Gerät (100) gemäß einem der Ansprüche 2 bis 7, wobei die Sensoreinheit (112) und/oder die beeinflussende Einheit (112)
- auf das Gehäuse (110) bzw. auf den Behälter (120) geklebt oder
- in das Gehäuse (110) bzw. in den Behälter (120) eingerastet sind; und wobei
- die erste und/oder zweite leitfähige Struktur auf das Gehäuse (110) bzw. auf den Behälter (120) gespritzt ist;
- oder die erste und/oder zweite leitfähige Struktur auf das Gehäuse (110) bzw. auf den Behälter (120) aufgedampft ist;
- oder die erste und/oder zweite leitfähige Struktur auf das Gehäuse (110) bzw. auf den Behälter (120) lackiert ist;
- oder die erste und/oder zweite leitfähige Struktur auf das Gehäuse (110) bzw. auf den Behälter (120) gedruckt ist.

9. Gerät (100) gemäß einem der vorhergehenden Ansprüche, wobei die Verarbeitungseinheit (111) eingerichtet ist,
- eine Zuweisungsfunktion zu ermitteln, die für unterschiedliche Kombinationen von Abstandswerten und Kapazitätswerten Füllstandswerte anzeigt; und
- den Wert für den Füllstand in Abhängigkeit von der Zuweisungsfunktion zu ermitteln.

10. Gerät (100) gemäß einem der vorhergehenden Ansprüche, wobei
- das Gehäuse (110) eine erste Gehäusewand aufweist, die dem Behälter (120) zugewandt ist; und
- der kapazitive Füllstandssensor (113) und/oder eine Sensoreinheit (112) des Abstandssensors (112, 122) an der ersten Gehäusewand angeordnet ist.

11. Gerät (100) gemäß einem der vorhergehenden Ansprüche, wobei der Behälter (120) aus einem dielektrischen Material besteht.

12. Gerät (100) gemäß einem der vorhergehenden Ansprüche, wobei das Gerät (110) ein Hausgerät, insbesondere ein Haushaltsgerät, umfasst.

13. Gerät (100) gemäß einem der vorhergehenden Ansprüche, wobei der Behälter (120) eine flüssige oder eine granulare Materie (121) enthält.

## Claims

1. Appliance, which comprises
- a housing (110);
- a container (120) which can be uncoupled from the housing (110);
- a capacitive fill level sensor (113), which is arranged on the housing (110) and is configured to determine a capacity value which depends upon a fill level of matter (121) in the container (120);
**characterised by**
- a distance sensor (112, 122), which is configured to determine a distance value which depends upon a distance between the fill level sensor (113) and the container (120); and
- a processing unit (111), which is configured to determine a value for the fill level on the basis of the capacity value and on the basis of the distance value,
wherein the distance sensor (112, 122) comprises an inductive distance sensor.

2. Appliance (100) according to claim 1, wherein the inductive distance sensor (112, 122) comprises
- a sensor unit (112), which is arranged on the housing (110) and is configured to generate an electromagnetic field; and
- an influencing unit (122), which is arranged on the container (120) and is configured to influence the electromagnetic field, in particular to attenuate it.

3. Appliance (100) according to claim 2, wherein
- an extent of the influencing, in particular the attenuation, of the electromagnetic field depends upon a distance between the sensor unit (112) and the influencing unit (122); and
- the distance value depends upon the extent of the influencing, in particular the attenuation, of the electromagnetic field.

4. Appliance (100) according to one of claims 2 to 3, wherein
- the sensor unit (112) comprises an electrical oscillating circuit for generating the electromagnetic field by means of an alternating current; and
- the distance value depends upon an amplitude and/or a phase of the alternating current.

5. Appliance (100) according to one of claims 2 to 4, wherein the sensor unit (112) comprises a coil and/or a first conductive structure.

6. Appliance (100) according to one of claims 2 to 5, wherein the influencing unit (122) comprises a second conductive structure, in particular a meandering structure.

7. Appliance (100) according to one of claims 2 to 6, wherein the influencing unit (112) has a film-like form.

8. Appliance (100) according to one of claims 2 to 7, wherein the sensor unit (112) and/or the influencing unit (112)
- is/are bonded to the housing (110) or to the container (120) or
- is/are latched into the housing (110) or into the container (120); and wherein
- the first and/or second conductive structure is/are sprayed onto the housing (110) or onto the container (120);
- or the first and/or second conductive structure is/are vapour-deposited onto the housing (110) or onto the container (120);
- or the first and/or second conductive structure is/are painted onto the housing (110) or onto the container (120);
- or the first and/or second conductive structure is/are printed onto the housing (110) or onto the container (120).

9. Appliance (100) according to one of the preceding claims, wherein the processing unit (111) is configured
- to determine an allocation function which indicates fill level values for different combinations of distance values and capacity values; and
- to determine the value for the fill level as a function of the allocation function.

10. Appliance (100) according to one of the preceding claims, wherein
- the housing (110) has a first housing wall, which faces towards the container (120); and
- the capacitive fill level sensor (113) and/or a sensor unit (112) of the fill level sensor (112, 122) is/are arranged on the first housing wall.

11. Appliance (100) according to one of the preceding claims, wherein the container (120) consists of a dielectric material.

12. Appliance (100) according to one of the preceding claims, wherein the appliance (110) comprises a home appliance, in particular a household appliance.

13. Appliance (100) according to one of the preceding claims, wherein the container (120) contains liquid or granular matter (121).

## Revendications

1. Appareil (100), qui comprend :
un boîtier (110),
un récipient (120) pouvant être découplé du boîtier (110),
un capteur de niveau de remplissage (113) capacitif, disposé sur le boîtier (110), qui est conçu pour déterminer une valeur de capacité qui dépend d'un niveau de remplissage de matière (121) dans le récipient (120),
**caractérisé par** :
un capteur de distance (112, 122) qui est conçu pour déterminer une valeur de distance qui dépend d'une distance entre le capteur de niveau de remplissage (113) et le récipient (120), et
une unité de traitement (111) qui est conçue pour déterminer une valeur pour le niveau de remplissage sur la base de la valeur de la capacité et sur la base de la valeur de distance,
dans lequel le capteur de distance (112, 122) comprend un capteur de distance inductif.

2. Appareil (100) selon la revendication 1, dans lequel le capteur de distance inductif (112, 122) comprend :
- un élément de capteur (112) qui est disposé sur le boîtier (110) et qui est conçu pour générer un champ électromagnétique, et
- un élément influent (122), qui est disposé sur le récipient (120) et est conçu pour influencer, notamment pour amortir le champ électromagnétique.

3. Appareil (100) selon la revendication 2, dans lequel
- une ampleur de l'influence, notamment de l'amortissement du champ électromagnétique est fonction d'une distance entre l'élément de capteur (112) et l'élément influent (122), et
- la valeur de distance est fonction de l'ampleur de l'influence, notamment de l'amortissement, du champ électromagnétique.

4. Appareil (100) selon l'une des revendications 2 ou 3, dans lequel
- l'élément de capteur (112) comprend un circuit oscillant électrique destiné à produire le champ électromagnétique au moyen d'un courant alternatif, et
- la valeur de distance dépend d'une amplitude et/ou d'une phase du courant alternatif.

5. Appareil (100) selon l'une des revendications 2 à 4, dans lequel l'élément de capteur (112) comprend une bobine et/ou une première structure conductrice.

6. Appareil (100) selon l'une des revendications 2 à 5, dans lequel l'élément influent (122) comprend une seconde structure conductrice, notamment une structure à méandres.

7. Appareil (100) selon l'une des revendications 2 à 6, dans lequel l'élément influent (122) a une forme de type film.

8. Appareil (100) selon l'une des revendications 2 à 7, dans lequel l'élément de capteur (112) et/ou l'élément influent (112)
- sont collés sur le boîtier (110) resp. sur le récipient (120), ou
- sont encliquetés dans le boîtier (110) resp. dans le récipient (120), et dans lequel
- la première et/ou la seconde structure conductrice sont appliquées par pulvérisation sur le boîtier (110) resp. sur le récipient (120), ou
- la première et/ou la seconde structure conductrice sont déposées en phase vapeur sous vide sur le boîtier (110) resp. sur le récipient (120), ou
- la première et/ou la seconde structure conductrice sont laquées sur le boîtier (110) resp. sur le récipient (120), ou
- la première et/ou la seconde structure conductrice sont imprimées sur le boîtier (110) resp. sur le récipient (120).

9. Appareil (100) selon l'une des revendications précédentes, dans lequel l'unité de traitement (111) est conçue pour
- déterminer une fonction d'association, qui indique pour différentes combinaisons de valeurs de distance et de valeurs de capacité des valeurs de niveau de remplissage, et
- déterminer la valeur pour le niveau de remplissage sur la base de la fonction d'association.

10. Appareil (100) selon l'une des revendications précédentes, dans lequel
- le boîtier (110) comprend une première paroi de boîtier, qui fait face au récipient (120), et
- le capteur capacitif de niveau de remplissage (113) et/ou l'élément de capteur (112) du capteur de distance (112, 122) sont disposés sur la première paroi de boîtier.

11. Appareil (100) selon l'une des revendications précédentes, dans lequel le récipient (120) est constitué d'un matériau diélectrique.

12. Appareil (100) selon l'une des revendications précédentes, dans lequel l'appareil (100) comprend un appareil domestique, notamment un appareil ménager.

13. Appareil (100) selon l'une des revendications précédentes, dans lequel le récipient (120) contient une matière (121) liquide ou granulaire.
